(19) Europäisches Patentamt
European Patent Office
Office européen des brevets

(11) **EP 2 269 024 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(21) Anmeldenummer: **09738061.2**

(22) Anmeldetag: **23.04.2009**

(51) Int Cl.:
**G01M 15/14** *(2006.01)*     **F04D 27/00** *(2006.01)*

(86) Internationale Anmeldenummer:
**PCT/EP2009/054911**

(87) Internationale Veröffentlichungsnummer:
**WO 2009/133017 (05.11.2009 Gazette 2009/45)**

(54) **WIRKUNGSGRADÜBERWACHUNG EINES VERDICHTERS**

EFFICIENCY MONITORING OF A COMPRESSOR

SURVEILLANCE DU TAUX DE RENDEMENT D'UN COMPRESSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.04.2008 DE 102008021102**

(43) Veröffentlichungstag der Anmeldung:
**05.01.2011 Patentblatt 2011/01**

(73) Patentinhaber: **Siemens Aktiengesellschaft 80333 München (DE)**

(72) Erfinder:
• **WINKES, Georg**
  **41564 Kaarst (DE)**
• **NÜHSE, Andreas**
  **44879 Bochum (DE)**

(56) Entgegenhaltungen:
**EP-A- 0 366 219     US-A- 5 347 467
US-B1- 6 503 048    US-B1- 7 094 019**

**Beschreibung**

Die Erfindung betrifft ein Verfahren zur Überwachung des Wirkungsgrades eines mindestens zweistufigen Verdichters, wobei zwischen den Stufen eine Zwischenkühlung vorgesehen ist, bei der Verdichtung eines Prozessmediums, bei welcher

- ein Mengenstrom durch den Verdichter,
- ein Eintrittsdruck des angesaugten Prozessmediums,
- ein Austrittsdruck des verdichteten Prozessmediums,
- eine Eintrittstemperatur des angesaugten Prozessmediums,
- eine Austrittstemperatur des verdichteten Prozessmediums,

als Parameter bestimmt werden und mittels Berechnungsmitteln ein Leistungsfaktor aus den Parametern ermittelt wird.

Die Überwachung von Turboverdichtern im laufenden Betrieb umfasst derzeit im Wesentlichen die Größen: Wellenschwingung- und Lage, Lagertemperaturen und andere Größen, bei denen aus einer einzigen Messung auf den Zustand einer Komponente oder eines Anlagenteils geschlossen werden kann. In Hinsicht auf einen wirtschaftlichen Betrieb eines Verdichters ist es von besonderem Interesse, mit welchem Wirkungsgrad der Verdichtungsvorgang abläuft. Um dies zu ermitteln, sind mehrere Messungen erforderlich, deren Signale miteinander verrechnet werden. Das Ergebnis dieser Berechnung stellt ein Maß für den Wirkungsgrad des Verdichters dar (z.B. polytroper oder isentroper Wirkungsgrad). Daneben erlauben hinreichend genaue Wirkungsgradbestimmungen auch Rückschlüsse auf den technischen Zustand des Verdichters und ob dieser korrigiert werden muss. Aus der US 2006/0155514 A1 ist es bekannt, die Leistung eines Verdichters nachzuvollziehen, indem einige Betriebsparameter gemessen werden und eine Schätzung auf deren Basis des Energieverbrauchs durchgeführt wird, wobei diese Schätzung mit den Ergebnissen aus einem theoretischen Modell verglichen werden und damit Rückschlüsse auf den Zustand der Anlage getätigt werden. Beide der vorgenannten Methoden erlauben eine jeweils nur grobe Abschätzung des Wirkungsgradverlustes, da die Genauigkeit der Schätzung insbesondere wegen der Mehrdimensionalität der Betriebsparameter stark eingeschränkt ist.

Die Dokumente EP 0 366 219 A2, US 5,347,467 und US 7,094,019 B1 beschäftigen sich jeweils mit der Annäherung an die Pumpgrenze eines Turboverdichters mittels regelungstechnischer Maßnahmen.

Zusammenfassend ist die Bestimmung des Wirkungsgradverlustes insbesondere deswegen verhältnismäßig problematisch, weil der Wirkungsgrad stets eine Funktion des Betriebspunktes ist, der sich durch eine Vielzahl von Einflussgrößen eines mehrdimensionalen Parameterfeldes bestimmt und Änderungen sich demzufolge stets auf die gleichen Betriebsbedingungen beziehen müssen, um eine Aussage in der erforderlichen Genauigkeit machen zu können.

Die Erfindung hat es sich daher zur Aufgabe gemacht, den Wirkungsgrad eines Verdichters, insbesondere eines Turboverdichters derartig genau zu bestimmen, dass Aussagen über den absoluten Verlust des Wirkungsgrades der Anlage im Betrieb möglich sind.

Zur Lösung der erfindungsgemäßen Aufgabe wird ein Verfahren mit den in Anspruch 1 aufgeführten Merkmalen vorgeschlagen. Die jeweils rückbezogenen Unteransprüche beinhalten vorteilhafte Weiterbildungen der Erfindung.

Die Messung des Drucks und der Temperatur am Eintritt und am Austritt jeder einzelnen Stufe ermöglicht es, einen Stufenwirkungsgrad zu ermitteln, auch wenn zwischen den Stufen eine Zwischenkühlung vorgesehen ist. Im Gegensatz zum Stand der Technik ist mittels der Erfindung eine stufengenaue Auflösung der Darstellung des Wirkungsgrades möglich und die Einflüsse der Saugtemperatur bzw. der Eintrittstemperatur in jede einzelne Stufe werden berücksichtigt.

Auch wenn in der Folge häufig mittels des Bezugszeichens auf den Wirkungsgrad verwiesen wird, ist der Wirkungsgrad nicht auf den polytropen Wirkungsgrad bestimmt sondern es kann jede Form des Wirkungsgrades sein, sollte nicht eine klare Einschränkung anderweitig vorgegeben sein.

Der Verdichter kann bei dem erfindungsgemäßen Verfahren nahezu jede beliebige Stufenzahl aufweisen. Realistische Anordnungen haben meist eine Stufenzahl von bis zu 8 Stufen.

Insbesondere kann eine Temperatur eines Kühlmittels einer Zwischenkühlung, wie im Stand der Technik, keine hinreichend genauen Erkenntnisse über die Eintrittstemperatur in eine nachfolgende Stufe bringen, geschweige den, Rückschlüsse auf Wirkungsgradveränderungen ermöglichen.

Sollte es bei einem erfindungsgemäßen Verfahren zwischen zwei Stufen keine Zwischenkühlung geben, kann die Austrittstemperatur aus der stromaufwärts gelegenen Stufe gleich der Eintrittstemperatur in die stromabwärts gelegene Stufe gesetzt werden.

In der ersten Stufe kann ggf. auf eine Messung des Eintrittsdrucks verzichtet werden, wenn dieser gleich dem Umgebungsdruck ist. Dementsprechend tritt die Messung des Umgebungsdrucks an die Stelle der Messung des Eintrittsdrucks in die erste Stufe.

Vorzugsweise sind die Module als Programmteile in einem Rechner vorhanden, der die erforderlichen Daten entweder direkt von der Maschinensteuerung oder der Verdichterregelung bezieht, oder eigene Eingangskanäle für die Messgrößen besitzt oder auf gespeicherte Messdaten zurückgreift.

Vorteilhaft kann die Gaszusammensetzung als eine Eingangsgröße für die Berechnung mittels der Module bestimmt werden, insbesondere, wenn diese veränderlich ist. Hierzu kann eine manuelle Eingabe, bevorzugt aber eine automatische Erfassung über eine kontinuierliche Gasanalyse vorgesehen sein. Insbesondere bei Luftverdichtern kann es von Vorteil sein, die Luftfeuchte (relativ oder absolut) der angesaugten Luft zu kennen, um die Genauigkeit der Berechnung zu verbessern.

Ausnahmsweise kann hinter einer Zwischenkühlung auf eine direkte Messung der Eintrittstemperatur in eine Stufe verzichtet werden, wenn die Rückkühltemperatur als konstant anzusehen ist, z.B. weil ein Rückkühltemperaturregler vorgesehen ist, z.B. in Form eines Kühlwassermengenregler oder geregelten Luftkühlers, die stets die gleiche Austrittstemperatur aus dem Zwischenkühler gewährleisten trotz ggf. variierender Eingangstemperatur . Dieser Fall entspricht einer indirekten Messung der Eintrittstemperatur, da für eine derart genaue Regelung der Rückkühltemperatur eine Messung von Temperaturen in der Zwischenkühlung erforderlich ist.

Unter der Annahme eines idealen Gases kann der polytrope Wirkungsgrad einer Stufe über die Formel

$$\eta_{pol} = \frac{1}{v} = \frac{c_p}{R} \cdot \frac{\ln \frac{T_a}{T_e}}{\ln \frac{p_a}{p_e}}$$

bestimmt werden. Hierbei ist $\eta_{pol}$ der polytrope Wirkungsgrad der Stufe n, v das Polytropenverhältnisses, $C_P$ die spezifische Wärmekapazität gemittelt über den entsprechenden Druck- und Temperaturbereich, R die ideale Gaskonstante, Ta die Austrittstemperatur, Te die Eintrittstemperatur, Pa der Austrittsdruck und der Pe der Eintrittsdruck, alles bezogen auf die jeweilige Stufe n.

Für ein höheres Maß an Genauigkeit kann der Wirkungsgrad mittels einer numerischen Integration einer RealgasZustandsgleichung des Prozessgases zwischen dem Eintritts- und dem Austrittszustand zur Bestimmung des Polytropenverhältnisses v erfolgen. Daneben ist auch die Ermittlung eines isentropen oder isothermen Wirkungsgrades möglich. Erfindungsgemäß wird der ermittelte Stufenwirkungsgrad in ein numerisches Verhältnis zu einem Referenzstufenwirkungsgrad gesetzt und das Ergebnis auf einer Anzeigeeinheit dargestellt. Dieses Verhältnis kann beispielsweise das Ergebnis einer Division sein oder als prozentualer Wirkungsgradverlust berechnet werden oder schlicht als Differenz. Beim Überschreiten eines bestimmten Grenzwertes dieses Verhältnisses kann ein gesonderter automatischer Hinweis an das Bedienpersonal ergehen, beispielsweise als visueller oder akustischer Alarm.

Eine vorteilhafte Weiterbildung der Erfindung sieht vor, dass in einem Speicher für jede Stufe ein Referenzstufenkennlinienfeld hinterlegt ist, aus dem eine Recheneinheit jeweils einen Referenzstufenwirkungsgrad aus den Messparametern ermittelt, und diesen zum Zweck der Bildung des Verhältnisses mit dem Wirkungsgrad numerisch, wie zuvor erläutert, vergleicht. Da eine vollständig theoretische Ermittlung des Referenzstufenkennlinienfeldes für die erfindungsgemäße Aufgabenstellung je nach Anwendung zu ungenau sein kann, schlägt die Erfindung außerdem vor, das Referenzstufenkennlinienfeld während eines Abgleichslaufs zu bestimmen, bei dem bei verschiedenen Leitschaufelstellungen und/oder Drehzahlen des Verdichters eine druckseitige Drossel von der vollständigen Öffnung ausgehend schrittweise oder kontinuierlich soweit geschlossen wird, bis eine Pumpgrenze erreicht wird. Die Ergebnisse dieser kontinuierlichen oder punktweisen Messung werden als Referenzstufenkennlinienfeldpunkte in einem Speicher abgelegt. Um von den punktweisen Messungen zu einem kontinuierlichen Kennlinienfeld zu gelangen, können zwischen den einzelnen Messpunkten Interpolationen zur Ermittlung von Zwischenwerten und Extrapolationen zur Ermittlung weiterer Werte durchgeführt werden. Alternativ können Parameter eines bereitgestellten theoretischen Modells an die Messwerte angepasst werden, so dass das dementsprechend angepasste theoretische Modell hinreichend genaue Referenzdaten für eine erfindungsgemäße Bewertung des aus den Messparametern ermittelten Wirkungsgrades bereitstellt.

In der Folge ist die Erfindung unter Bezugnahme auf Zeichnungen zur Verdeutlichung anhand eines Ausführungsbeispiels näher beschrieben. Für den Fachmann ergeben sich aus der Erfindung weitere Umsetzungsmöglichkeiten neben diesem speziellen Ausführungsbeispiel. Es zeigen:

Figur 1    eine schematische Darstellung der Messungen nach einem erfindungsgemäßen Verfahren,

Figur 2    eine schematische Darstellung der Ermittlung eines Referenzstufenkennlinienfeldes,

Figur 3    eine schematische Darstellung eines Referenzstufenkennlinienfeldes.

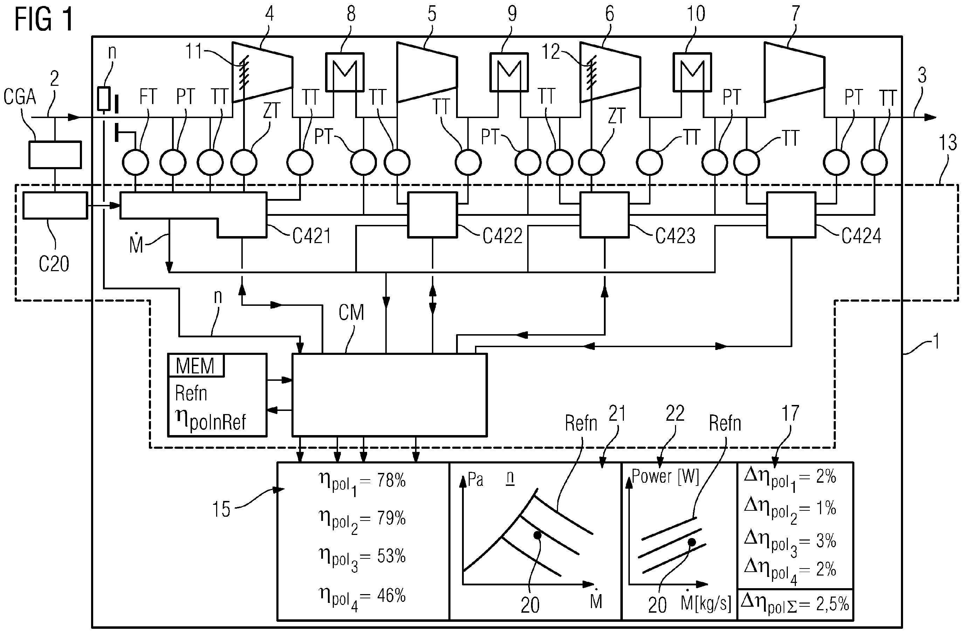

Figur 1 zeigt schematisch einen Verdichter 1, auf den ein erfindungsgemäßes Verfahren zur Überwachung des Wirkungsgrades angewendet wird. In den Verdichter 1 tritt ein Massenstrom (gemessen als $\dot{M}$) als Eintrittsmassenstrom 2 ein und als Austrittsmassenstrom 3 aus. Der Verdichter 1 weist vier Stufen 4, 5, 6, 7 (von links nach rechts entsprechend erste Stufe 4 bis vierte Stufe 7) auf, die der Eintrittsmassenstrom 2 durchläuft, wobei zwischen den Stufen jeweils eine Zwischenkühlung 8, 9, 10 (Nummerierung mutatis mutandis) vorgesehen ist.

Vor dem Eintritt in jede Stufe 4, 5, 6, 7 und nach dem Austritt aus jeder Stufe 4, 5, 6, 7 wird jeweils der Druck mittels einer Druckmessstelle PT und die Temperatur mittels einer Temperaturmessstelle TT gemessen. Da bis auf einen kleinen und nachvollziehbaren Druckverlust in der Zwischenkühlung 8, 9, 10 der Druck vor der Zwischenkühlung 8, 9, 10 und nach der Zwischenkühlung 8, 9, 10 identisch ist, ist die Druckmessung nach der jeweiligen Stufe 4, 5, 6, 7 mit der Druckmessung vor der nachfolgenden Stufe 5, 6, 7 zu einer Druckmessstelle PT zusammengefasst.

Die erste Stufe 4 und die dritte Stufe 6 sind mit einem verstellbaren Eintrittsleitgitter 11, 12 versehen, dessen Stellung mittels jeweils eines Stellungsgebers ZT ermittelt wird. Eingangs des Verdichters 1 wird der Eintrittsmassenstrom 2, der identisch ist mit dem Austrittsmassenstrom 3, mittels einer Massenstrommessung FT gemessen und als Messwert einem Parameter $\dot{M}$ zugeordnet. Jeder Stufe ist ein Modul C421, C422, C423, C424 zugeordnet, welches stufenspezifische Berechnungen durchführt. Die einzelnen Module C421 bis C424 sind als Softwareprogramme ausgebildet und werden auf einem Computer 13 ausgeführt.

Eine kontinuierliche Gasanalyseeinheit CGA analysiert permanent den Eintrittsmassenstrom 2 und übermittelt eine gemessene Gaszusammensetzung C20 an das erste Modul C421. Diese Gasanalyseeinheit ist insbesondere eine sinnvolle optionale Ausstattung, wenn die Zusammensetzung des Eintrittsmassenstroms wechselnd ist. In diesem Fall können auch zyklisch Messungen durchgeführt werden. Das erste Modul bestimmt aus der Massenstrommessung FT und der Gaszusammensetzung C20 den Stoffmengenstrom oder Massenstrom $\dot{M}$ und übermittelt diesen Parameter an die übrigen Module C422 bis C424. Jedes der einzelnen Module C421 bis C424 ermittelt aus einer Stufeneintrittstemperatur Te n (Eintrittstemperatur für die Stufe n), der Stufenaustrittstemperatur Ta n, dem Stufeneintrittsdruck Pe n, dem Stufenaustrittsdruck Pa n sowie der Gaszusammensetzung C20 einen polytropen Wirkungsgrad $\eta_{pol\,n}$. Dieser polytrope Wirkungsgrad $\eta_{pol\,n}$ wird für jede Stufe 4, 5, 6, 7 auf einer Anzeigeeinheit 15 angezeigt. Bei nahezu idealen Zuständen wir die Berechnung nach der folgenden Formel durchgeführt:

$$\eta_{pol} = \frac{1}{v} = \frac{\overline{c_p}}{R} \cdot \frac{\ln\dfrac{T_a}{T_e}}{\ln\dfrac{p_a}{p_e}}$$

Die einzelnen Module C421 bis C424 stehen mit einem zentralen Modul CM in informationenaustauschender Verbindung. Das zentrale Modul CM greift auf einen Speicher MEM zu, in dem unter anderem Referenzstufenkennlinienfelder Ref n für die einzelnen Stufen 4, 5, 6, 7 hinterlegt sind. Aus einer Messung der Drehzahl n sowie der Stellung der Eintrittsleitgitter 11, 12 und dem Massenstrom $\dot{M}$ ermittelt das zentrale Modul CM aus dem jeweiligen Referenzstufenkennlinienfeld Ref n einen dazugehörigen Stufenwirkungsgrad $\eta_{pol\,n}$. Ein Verhältnis 17 zwischen dem tatsächlichen Stufenwirkungsgrad $\eta_{pol\,n}$ und dem Referenzstufenwirkungsgrad $\eta_{pol\,n\,Ref}$ wird als Differenz $\Delta\eta_{Pol\,n}$ auf der Anzeigeeinheit 15 für jede Stufe dargestellt. Auf der Anzeigeeinheit 15 wird außerdem grafisch für jede Stufe 4, 5, 6, 7 umschaltbar das Referenzstufenkennlinienfeld Ref n und der in diesem befindliche aktuelle Betriebspunkt 20 in einem ersten Rahmen 21 dargestellt. In einem zweiten Rahmen 22 wird die Leistungsaufnahme (Y:Power; X:Massenstrom $\dot{M}$) grafisch als Referenzstufenkennlinienfeld Ref n mit dem aktuellen Betriebspunkt 20 angezeigt.

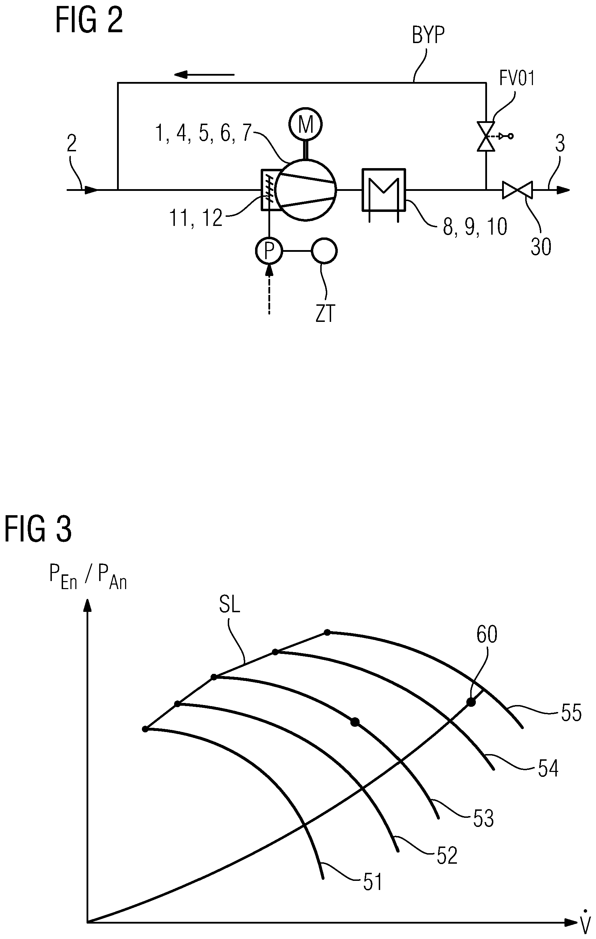

Figur 2 und Figur 3 illustrieren vereinfacht das Vorgehen bei der Bestimmung eines Referenzstufenkennlinienfeldes Ref n, wobei der Verdichter 1 und die Zwischenkühlungen 8, 9, 10 ohne Darstellung der einzelnen Stufen 4, 5, 6, 7 wiedergegeben ist. Der Verdichter 1 wird von einem Antrieb M angetrieben. Vorzugsweise während der Inbetriebnahme des Verdichters 1 wird ein ausgangsseitiges Absperrorgan 30 geschlossen und ein Umblaseventil FV01 bzw. eine Drossel zunächst vollständig geöffnet. Das in einer Bypassleitung BYP angeordnete Umblaseventil FV01 wird während der Ermittlung der Referenzstufenkennlinienfelder Ref n kontinuierlich geschlossen, bis der Verdichter 1 an eine Pumpgrenze SL gelangt. Gelangt der Verdichter 1 an die Pumpgrenze SL reißt die Strömung in dem Verdichter ab und es kommt zumindest stoßweise zu Rückströmungen, die als starke Vibrationen messbar sind. Die bis zu diesem Punkt aufgenommenen Werte für die Eintrittstemperaturen Te n, Austrittstemperaturen Ta n, Eintrittsdrücke Pe n und Austrittsdrücke Pa n sowie für den Massenstrom M. und die Stellung der Eintrittsleitgitter 11, 12 werden gemeinsam mit der Gaszusammensetzung C20 benutzt, um für jede Stufe 4, 5, 6, 7 das Referenzkennfeld zu generieren oder zumindest zu korrigieren. Die in Folge des Pumpens des gesamten Verdichters 1 faktische Begrenzung des Betriebes zur Ermittlung des Referenzkennfeldes für jede einzelne Stufe begrenzt die Referenzdatenermittlung einseitig, wobei während des Normalbetriebes ggf. weitere Daten als Referenzdaten bei der Erzeugung des Referenzkennfeldes berücksichtigt werden können. Die Erzeugung des Referenzstufenkennlinienfeldes Ref n kann einerseits von einem theoretischen Vormodell ausgehen, das mittels der gemessenen Daten numerisch korrigiert wird oder anhand der gemessenen Daten kann beispielsweise mittels Regression eine beliebige mehrdimensionale Funktion zu einem Referenzkennfeld angepasst werden. Bei der automatisierten Erfassung des Referenzkennfeldes für jede einzelne Stufe können numerische Methoden angewendet werden, die eine optimale Anpassung bewirken. Bevorzugt wird ein Optimierungsalgorithmus eingesetzt, der durch Manipulation eines theoretischen Kennfeldes eine Minimierung des Residuums zu den gemessenen Werten erzeugt.

Figur 3 zeigt ein Referenzstufenkennlinienfeld Ref n mit einem auf der Y-Achse aufgetragenen

Druckverhältnis ($P_{En}$ / $P_{An}$) (oder dimensionslose Druckziffer) und einem auf der X-Achse aufgetragenen Volumenstrom. Alternativ kann auf der X-Achse auch der mittels der Schallgeschwindigkeit normierte Volumenstrom aufgetragen sein, so dass die Darstellung invariant wird. Desweiteren können zusätzliche Scharparameter in Form der Drehzahl oder der Umfangsmachzahl vorgesehen sein, die im Interesse der Übersichtlichkeit hier fortgelassen wurden. Die fünf Kurven 51-55 umfassende Kurvenschar stellt verschiedene Drehzahlen bzw. Einstellungen der Eintrittsleitapparate 11, 12 dar, beginnend mit der Minimaldrehzahl unten links. Zu höheren Druckverhältnissen hin werden die Kurven 51-55 des Referenzstufenkennlinienfeldes Ref n durch die Pumpgrenzlinie SL beschränkt. Zu den kleinen Druckverhältnissen werden die Messungen begrenzt durch den Zustand der vollständigen Ventilöffnung der Drossel symbolisiert mittels der Linie 60. Der aktuelle Betriebspunkt 20 befindet sich auf der mittleren Kurve 53 der Kurvenschar.

Die Ermittlung der Messparameter kann sowohl beim gesonderten Anfahren bestimmter Betriebspunkte, beim Startvorgang als auch im Regelbetrieb erfolgen.

## Patentansprüche

1. Verfahren zur Überwachung des absoluten Verlustes an Wirkungsgrad ($\eta_{pol\,n}$) im Betrieb eines mindestens zweistufigen Verdichters (1), wobei zwischen den Stufen eine Zwischenkühlung vorgesehen ist, bei der Verdichtung eines Prozessmediums, bei welcher

- ein Mengenstrom durch den Verdichter (1),
- ein Eintrittsdruck (Pe n) des angesaugten Prozessmediums,
- ein Austrittsdruck (Pa n) des verdichteten Prozessmediums,
- eine Eintrittstemperatur (Te n) des angesaugten Prozessmediums,
- eine Austrittstemperatur (Ta n) des verdichteten Prozessmediums,

als Parameter bestimmt werden und mittels Berechnungsmitteln ein Leistungsfaktor aus den Parametern ermittelt wird,

- am Eingang jeder Stufe (4, 5, 6, 7) eine Stufeneintrittstemperatur (Ten) und ein Stufeneintrittsdruck (Pen) direkt oder indirekt als Messparameter gemessen werden,
- am Ausgang jeder Stufe eine Stufenaustrittstemperatur (Tan) und als Stufenaustrittsdruck (Pan) direkt oder indirekt als Messparameter gemessen werden,
- jeder Stufe (4, 5, 6, 7) ein Modul (C421 bis C424) zugeordnet ist, das mittels der Berechnungsmittel als Leistungsfaktor aus den Messparametern einen Stufenwirkungsgrad ($\eta_{pol\,n}$) berechnet,
- **dadurch gekennzeichnet, dass** der ermittelte Stufenwirkungsgrad ($\eta_{pol\,n}$) in ein numerisches Verhältnis (17) zu einem Referenzstufenwirkungsgrad ($\eta_{pol\,n\,Ref}$) gesetzt wird, wobei das Verhältnis (17) auf einer Anzeigeeinheit (15) dargestellt wird.

2. Verfahren nach Anspruch 1, wobei nur ein Modul (C421) aus mindestens einer Messung eine Mengenstromberechnung (Massenstrom ($\dot{M}$)) durchführt und den bestimmten Mengenstrom an die anderen Module (C422 bis C424) weiterleitet.

3. Verfahren nach Anspruch 1 oder 2, wobei die Module (C421 bis C424) als Softwareprogramme ausgebildet sind, die bei Ausführung mittels eines Computers (13) aus den Messparametern den Stufenwirkungsgrad ($\eta_{pol\,n}$) für die jeweilige Stufe (4, 5, 6, 7) bestimmen.

4. Verfahren nach mindestens einem der vorhergehenden Ansprüche, wobei die Module (C421 bis C424) eigene Eingangskanäle für die Messparameter aufweisen.

5. Verfahren nach mindestens einem der vorhergehenden Ansprüche 1 bis 3, wobei die Messparameter zunächst in einem Speicher (MEM) gespeichert werden und das Modul (C421 bis C424) die Messparameter aus dem Speicher abruft.

6. Verfahren nach mindestens einem der vorhergehenden Ansprüche 1 bis 3, wobei die Module (C421 bis C424) die Messparameter direkt von einer Maschinensteuerung oder einer Verdichterregelung abrufen.

7. Verfahren nach mindestens einem der vorhergehenden Ansprüche, wobei der Stufenwirkungsgrad ($\eta_{pol\,n}$) als polytroper Stufenwirkungsgrad ($\eta_{pol\,n}$) bestimmt wird.

8. Verfahren nach dem vorhergehenden Anspruch 7, wobei der Stufenwirkungsgrad ($\eta_{pol\,n}$) berechnet wird als

$$\eta_{pol} = \frac{1}{\nu} = \frac{\overline{c_p}}{R} \cdot \frac{\ln\frac{T_a}{T_e}}{\ln\frac{p_a}{p_e}}$$

für eine Stufe n.

9. Verfahren nach mindestens einem der vorhergehenden Ansprüche, wobei der Stufenwirkungsgrad ($\eta$

$_{pol\,n}$) aus einer numerischen Integration einer Realgaszustandsgleichung zwischen den Messparametern am Eintritt und denen am Austritt bestimmt wird.

10. Verfahren nach mindestens einem der vorhergehenden Ansprüche, wobei in einem Speicher (NEM) für jede Stufe (4, 5, 6, 7) ein Referenzstufenkennlinienfeld (Ref n) hinterlegt ist, aus denen eine Recheneinheit den Referenzstufenwirkungsgrad ($\eta_{pol\,n\,Ref}$) aus den Messparametern ermittelt.

11. Verfahren nach mindestens einem der vorhergehenden Ansprüche, wobei der Verdichter (1) als Turboverdichter ausgebildet ist.

12. Verfahren nach mindestens einem der vorhergehenden Ansprüche, wobei Zwischenkühlungen (8, 9, 10) zwischen den einzelnen Stufen (4, 5, 6, 7) des Verdichters (1) vorgesehen sind.

13. Verfahren nach mindestens einem der vorhergehenden Ansprüche,
wobei eine Zusammensetzung (C20) des Prozessmediums automatisch mittels einer kontinuierlichen Gasanalyse CGA erfasst wird und eine Eingangsgröße für die Berechnung des Stufenwirkungsgrads ($\eta_{pol\,n}$) ist.

14. Verfahren nach Anspruch 10,
wobei das Referenzstufenkennlinienfeld (Ref n) während eines Abgleichlaufs bestimmt wird, bei dem bei verschiedenen Leitschaufelstellungen mindestens eines
Eintrittsleitgitters (11, 12) und/oder verschiedenen Drehzahlen (n) eines Rotors des Verdichters (1) eine druckseitige Drossel (Umblaseventil FV01) von der vollständigen Öffnung schrittweise oder kontinuierlich soweit geschlossen wird, bis eine Pumpgrenze (SL) erreicht wird.

## Claims

1. Method for monitoring the absolute loss in efficiency ($\eta_{pol\,n}$) during operation of an at least two stage compressor (1), wherein an intermediate cooling stage is provided between the stages, during the compression of a process medium, in the case of which monitoring

   - a flow rate through the compressor (1),
   - an entry pressure (Pe n) of the drawn-in process medium,
   - an exit pressure (Pa n) of the compressed process medium,
   - an entry temperature (Te n) of the drawn-in process medium, and
   - an exit temperature (Ta n) of the compressed process medium

are determined as parameters, and calculation means are used to ascertain a performance factor from the parameters,

   - a stage entry temperature (Te n) and a stage entry pressure (Pe n) are measured directly or indirectly as measurement parameters at the inlet of each stage (4, 5, 6, 7),
   - a stage exit temperature (Ta n) and a stage exit pressure (Pa n) are measured directly or indirectly as measurement parameters at the outlet of each stage,
   - each stage (4, 5, 6, 7) is assigned a module (C421 to C424) that uses the calculation means to calculate stage efficiency ($\eta_{pol\,n}$) as performance factor from the measurement parameters,
   - **characterized in that**
   - the ascertained stage efficiency ($\eta_{pol\,n}$) is set in a numerical ratio (17) to a reference stage efficiency ($\eta_{pol\,n\,Ref}$), the ratio (17) being displayed on a display unit (15).

2. Method according to Claim 1, in which only one module (C421) carries out a calculation of flow rate (mass flow ($\dot{M}$)) from at least one measurement, and passes on the flow rate determined to the other modules (C422 to C424).

3. Method according to Claim 1 or 2, in which the modules (C421 to C424) are designed as software programs which determine the stage efficiency ($\eta_{pol\,n}$) for the respective stage (4, 5, 6, 7) from the measurement parameters are executed by means of a computer (13).

4. Method according to at least one of the preceding claims, in which the modules (C421 to C424) have dedicated input channels for the measurement parameters.

5. Method according to at least one of the preceding Claims 1 to 3, in which the measurement parameters are firstly stored in a memory (MEM), and the module (C421 to C424) calls the measurement parameters from the memory.

6. Method according to at least one of the preceding Claims 1 to 3, in which the modules (C421 to C424) call the measurement parameters directly from a machine controller or a compressor regulator.

7. Method according to at least one of the preceding claims, in which the stage efficiency ($\eta_{pol\,n}$) is determined as a polytropic stage efficiency ($\eta_{pol\,n}$).

8. Method according to the preceding Claim 7, in which

the stage efficiency ($\eta_{\text{pol } n}$) is calculated as

$$\eta_{pol} = \frac{1}{v} = \frac{\overline{c_p}}{R} \cdot \frac{\ln \frac{T_a}{T_e}}{\ln \frac{p_a}{p_e}}$$

for a stage n.

9. Method according to at least one of the preceding claims, in which the stage efficiency ($\eta_{\text{pol } n}$) is determined from a numerical integration of a real gas equation of state between the measurement parameters at the entry and those at the exit.

10. Method according to at least one of the preceding claims, in which there is stored in a memory (MEM) for each stage (4, 5, 6, 7) a reference stage set of characteristics (Ref n), from which set an arithmetic logic unit ascertains the reference stage efficiency ($\eta_{\text{pol } n \text{ Ref}}$) from the measurement parameters.

11. Method according to at least one of the preceding claims, in which the compressor (1) is designed as a turbo-compressor.

12. Method according to at least one of the preceding claims, in which intermediate cooling stages (8, 9, 10) are provided between the individual stages (4, 5, 6, 7) of the compressor (1).

13. Method according to at least one of the preceding claims, in which a composition (C20) of the process medium is acquired automatically by means of a continuous gas analysis (CGA) and is an input variable for the calculation of the stage efficiency ($\eta_{\text{pol } n}$).

14. Method according to Claim 10, in which the reference stage set of characteristics (Ref n) is determined during a calibration operation in the case of which given various guide blade positions of at least one inlet guide grid (11, 12) and/or various rotational speeds (n) of a rotor of a compressor (1) a pressure-side choke (diverter valve FV01) is closed in stepwise or continuous fashion, from being completely open, until a pump limit (SL) is reached.

**Revendications**

1. Procédé de contrôle de la perte absolue de rendement ($\eta_{\text{pol } n}$) en fonctionnement d'un compresseur (1) à au moins deux étages, dans lequel il est prévu, entre les étages, un refroidissement intermédiaire lors de la compression d'un fluide de processus, dans lequel on détermine comme paramètres

- un flux massique dans le compresseur (1),
- une pression (Pe n) d'entrée du fluide de processus aspiré,
- une pression (Pa n) de sortie du fluide de processus comprimé,
- une température (Te n) d'entrée du fluide de processus aspiré,
- une température (Ta n) de sortie du fluide de processus comprimé,

et on détermine, à l'aide de moyens de calcul, un facteur de puissance à partir des paramètres,

- on mesure directement ou indirectement comme paramètres de mesure, à l'entrée de chaque étage (4, 5, 6, 7), une température (Ten) d'entrée dans l'étage et une pression (Pen) d'entrée dans l'étage,
- on mesure directement ou indirectement, comme paramètres de mesure, à la sortie de chaque étage, une température (Tan) de sortie de l'étage et une pression (Pan) de sortie de l'étage,
- on associe à chaque étage (4, 5, 6, 7) un module (C421 à C424), qui, à l'aide des moyens de calcul, calcule, comme facteur de puissance, à partir des paramètres de mesure, un rendement ($\eta_{\text{pol } n}$) d'étage, **caractérisé en ce que**
- on met le rendement ($\eta_{\text{pol } n}$) d'étage déterminé dans un rapport (17) numérique avec un rendement ($\eta_{\text{pol } n \text{ Ref}}$) d'étages de référence, le rapport (17) étant représenté sur une unité (15) d'affichage.

2. Procédé suivant la revendication 1, dans lequel seulement un module (C421) effectue, à partir d'au moins une mesure, un calcul de flux massique (flux massique ($\dot{M}$)) et achemine le flux massique déterminé aux autres modules (C422 à C424).

3. Procédé suivant la revendication 1 ou 2, dans lequel les modules (C421 à C 424) sont constitués sous la forme de programmes logiciels qui, lorsqu'ils sont exécutés au moyen d'un ordinateur (13), déterminent, à partir des paramètres de mesure, le rendement ($\eta_{\text{pol } n}$) d'étage pour l'étage (4, 5, 6, 7) respectif.

4. Procédé suivant au moins l'une des revendications précédentes, dans lequel les modules (C421 à C 424) ont leurs propres canaux d'entrée des paramètres de mesure.

5. Procédé suivant au moins l'une des revendications précédentes 1 à 3, dans lequel on mémorise d'abord les paramètres de mesure dans une mémoire (MEM) et le module (C421 à C424) appelle les paramètres de mesure de la mémoire.

**6.** Procédé suivant au moins l'une des revendications précédentes 1 à 3, dans lequel les modules (C421 à C424) appellent les paramètres de mesure directement d'une commande machine ou d'une régulation de compresseur.

**7.** Procédé suivant au moins l'une des revendications précédentes, dans lequel on détermine le rendement ($\eta_{pol\,n}$) d'étage sous la forme d'un rendement ($\eta_{pol\,n}$) d'étage polytrope.

**8.** Procédé suivant la revendication précédente 7, dans lequel on calcule le rendement ($\eta_{pol\,n}$) d'étage par

$$\eta_{pol} = \frac{1}{\nu} = \frac{\overline{c_p}}{R} \cdot \frac{\ln \frac{T_a}{T_e}}{\ln \frac{p_a}{p_e}}$$

pour un étage n.

**9.** Procédé suivant au moins l'une des revendications précédentes, dans lequel on détermine le rendement ($\eta_{pol\,n}$) d'étage à partir d'une intégration numérique d'une équation d'état de gaz réel entre les paramètres de mesure à l'entrée et ceux à la sortie.

**10.** Procédé suivant au moins l'une des revendications précédentes, dans lequel on met, dans une mémoire (NEM) pour chaque étage (4, 5, 6, 7), une courbe (Ref n) caractéristique d'étage de référence, à partir desquelles une unité informatique détermine le rendement ($\eta_{pol\,n\,Ref}$) d'étage de référence à partir des paramètres de mesure.

**11.** Procédé suivant au moins l'une des revendications précédentes, dans lequel le compresseur (1) est constitué sous la forme d'un turbocompresseur.

**12.** Procédé suivant au moins l'une des revendications précédentes, dans lequel il est prévu des refroidissements (8, 9, 10) intermédiaires entre les divers étages (4, 5, 6, 7) du compresseur (1).

**13.** Procédé suivant au moins l'une des revendications précédentes, dans lequel on détecte une composition (C20) du fluide de processus automatiquement au moyen d'une analyse CGA des gaz en continu et cette composition est une grandeur d'entrée pour le calcul du rendement ($\eta_{pol\,n}$) d'étage.

**14.** Procédé suivant la revendication 10, dans lequel on détermine la courbe (Ref n) caractéristique d'étage de référence pendant une marche de réglage, dans laquelle, pour diverses positions d'aubes directrices d'au moins une grille (11, 12) directrice d'entrée et/ou diverses vitesses (n) de rotation d'un rotor du compresseur (1), on ferme un étranglement du côté refoulement (vanne FV01) pas à pas ou continuellement depuis l'ouverture complète jusqu'à atteindre une limite (SL) de pompage.

FIG 1

FIG 2

BYP

FV01

2

1, 4, 5, 6, 7

M

11, 12

8, 9, 10

3

30

P

ZT

FIG 3

$P_{En} / P_{An}$

SL

60

55

54

53

52

51

$\dot{V}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060155514 A1
- EP 0366219 A2
- US 5347467 A
- US 7094019 B1